# EUROPEAN PATENT APPLICATION

(11) **EP 4 124 633 A1**
(43) Date of publication of application: **01.02.2023**
(21) Application number: 21306050.2
(22) Date of filing: 28.07.2021
(51) Int. Cl.: C08H 8/00, C08L 97/02, B27N 3/00

(54) **PROCESS FOR THE MANUFACTURE OF A LIGNOCELLULOSIC FIBRE-BASED COMPOSITE MATERIAL USING POLYSACCHARIDE-BASED PELLETS AND COMPOSITE MATERIAL OBTAINED BY SUCH PROCESS**

(71) Applicant: EVERTREE, 60280 Venette (FR)
(72) Inventor: The designation of the inventor has not yet been filed
(74) Representative: Santarelli

(57) **Abstract**

The present invention relates to a process for the manufacture of a lignocellulosic fibre-based composite material comprising the steps of:
- obtaining a fibrous mix (S1) comprising defibrated lignocellulosic material and defibrated polysaccharide-based pellets;
- blending the fibrous mix with an adapted liquid to form a composite mixture;
- curing (S3) the composite mixture, thereby forming the lignocellulosic fibre-based composite material.

The polysaccharide-based pellets comprise polysaccharides and optionally a resin that constitute more than 50% by weight of each pellet.

The adapted liquid can comprise a resin, or an aqueous liquid and/or a resin if the polysaccharides contained in the polysaccharides based pellets comprise wheat flour, starch, gum arabic, glucomannan, methyl or carboxymethylcellulose, or chitosan.

A preferred application of this process is the manufacture of fibreboards, such as MDF.

## Description

### Field of the Invention

The present invention relates to a process for the manufacture of a fibre-based composite material. The invention more particularly relates to a process for preparation of a fibre-based material comprising fibres bound by an adhesive comprising polysaccharides.

### Background of the Invention

In known manufacturing processes that utilize an adhesive that usually is or comprises a resin, the adhesive portion will set from a liquid state to a solid state. The adhesive may set through loss of water into the air or into another portion of the composite, by a phase change, or by some chemical or physio-chemical change of the adhesive.

Adhesive compositions are used extensively in the wood products industry to make composites such as chipboard, fibreboard, and related composite wood products. Adhesive compositions are also used to make engineered lumber composites. Traditionally, these wood composites have been made using a urea formaldehyde (UF) resin or a phenol formaldehyde (PF) resin. More recently, polymeric methylenediphenyl diisocyanate (pMDI) has been used to make these composites. UF, PF and pMDI resins are made from petroleum feedstock and can require high temperature conditions to facilitate curing. For example, heating the resin-wood mixture to temperatures exceeding 100° C., and often 200° C., while exerting pressure on the mixture in order to form the composite.

Many adhesives in the composite industry, especially where biomaterials are used, are water-borne. In this situation, water serves as a primary component either to dissolve or disperse the adhesive components. For example, urea-formaldehyde (UF) adhesives are often provided in the form of a solution.

Manufacturing of fibreboards, such as medium-density fibreboards (MDF), is one of the main applications of the processes for manufacturing a fibre-based composite material. Medium-density fibreboard (MDF), and other types of fibreboards such as high density fibreboard (HDF), low density fibreboard (LDF) and ultra-low density fibreboard (ULDF) are generally obtained from a lignocellulosic material, in particular wood, according to a process that may be summed up as follows.

The first step in the fibreboard (e.g., MDF, HDF, LDF or ULDF) manufacturing process is wood handling which typically includes debarking, log breaking into chips and chip/bark handling systems. In this step, wood chips are separated from stones and other contaminations. The next step is the fibre preparation, which may include processing the wood chips in a chip washer, a steaming bin, a preheater and a defibrating apparatus such as a refiner or defibrator. In the steaming bin, wood chips are heated by steam to a temperature around 80-95 °C, and they are then conveyed by a plugscrew that squeezes water out of the chips before they enter the pre-heater. In the preheater the chips are heated to a temperature of around 160 °C which makes the fibres soft and easier to separate. The softened chips are then transported and introduced (usually through a screw) into the defibrator, where they are ground into fibres between two metal members (e.g., discs or plates) under a steam pressure up to 8 bar. The fibres flow with the steam out of the refiner into a so-called blow line where wood fibres are resinated, *i.e.* sprayed with a thermoset resin. The obtained fibres are dried with for example one or two dryer cyclones and a Z-Sifter. In the cyclones the fibres are dried with hot flue gas or steam to attain 5%-10% moisture content. The Z-Sifter cleans the fibres of contaminates before the forming stage. During the forming stage the resinated fibres are formed into a mat, which enters a cold pre-press before it goes into a hot press. The last stage is handling, where the fibreboards are cut to the desired dimensions, cooled down, and stacked before delivery.

Such a process and the industrial equipment that can be used to perform it are described for example in: Wood-Based Panels - An Introduction for Specialists, COST Office, 2010, Published by Brunel University Press, ISBN 978-1-902316-82-6, and by Halvarsson, S., Manufacture of straw MDF and fibreboard, Thesis for the degree of Doctor of technology, Sundsvall, 2010*.*

In certain known fibre-based materials, the wood fibres are replaced by other natural fibres, such as straw fibres (wheat, rice or corn fibre). For example, US5663221 discloses the use of sunflower husks to make MDF boards, as replacement of the wood fibre-based reinforcement. According to the process disclosed in this document, the raw material used undergoes steps similar to those used for making wood-based MDF. The process according to this document aims at decreasing the consumption of energy for the production of MDF boards, compared to the production of wood based boards.

WO00/06650 discloses composite materials obtained from vegetable materials containing fibres such as sunflower, rapeseed, and soybean, and a bonding agent. This document however relates to a thermoplastic process.

In some of the known processes for manufacturing a fibre-based composite, protein raw material such as soy is used. More particularly, protein sources, such as soy protein isolate or soy flour, are used in combination with the curing agent.

US630699 discloses a soybean-based adhesive resin comprising soybean flour and a crosslinking agent, namely a PF resin, and a method of making this adhesive. This method involves providing an aqueous solution of soybean flour (dispersion of flour in an aqueous liquid, typically water) and adding a cross-linking agent to the solution under conditions effective to cross-link the soybean flour so that an adhesive resin is formed. This adhesive can be used for the manufacture of fibreboards. More generally, there is disclosed a composite product which includes particulate plant material and the soybean-based adhesive resin.

Similarly, WO2009/048598 discloses an adhesive for lignocellulosic composite comprising an aqueous mixture of protein, a polyamidoamine-epichlorohydrin (PAE) resin as crosslinker, and a non-urea diluent (a low volatility water-soluble compound that provides low viscosity in water).

Such processes that use an aqueous solution with a protein plant powder or flour dispersed in water with a resin are however water consuming and may lead to viscosity issues of the adhesive. They may also lead to process issues, in particular because an excessive amount of water may be brought on the fibres. This requires to perform additional drying to obtain the desired amount of water brought on the fibres before pressing. Such processes are also complex and not cost efficient, because the use of aqueous dispersion requires grinding the plant material and then mixing the plant powder with an aqueous liquid (such as water). Whether the dispersion is done directly on the production site of the composite material or purchased from a supplier, it is a costly product. When the dispersion is purchased, the shelf life of the dispersion must be managed, and may be a source of costs.

WO2016/141126 discloses a process for preparing lignocellulosic based composites, which are bonded with an adhesive comprising a protein source and a curing agent, namely a PAE resin. According to this process, a powdered or "dry" (*e.g*. flour) protein source is mixed with a lignocellulosic material after and separately from the mixing of the lignocellulosic material with a curing agent (resin).

Such a method is also not simple or cost-effective in that it requires the production or supply of a plant powder, and in the latter case the management of the shelf life of the powder. Furthermore, ensuring a good distribution of the powder in the composite material may be complex, in particular in that sedimentation of the powder may occur.

WO2021/069689 relates to a process for the manufacture of a lignocellulosic fibre-based composite material that uses defibrated lignocellulosic material and defibrated plant seeds. The defibrated plant seeds form a source of protein. The process disclosed in this document has costs and environmental friendliness advantages (in particular as it saves water and energy) over the comparable processes known in the prior art.

As alternative to protein based adhesives, starch based compositions have been tested as wood adhesives.

Some results of the use of starch as wood adhesive are provided in the following articles :
- Preparation, characterization and properties of starch-based wood adhesive, by Zhenjiong Wang, Zhaofeng Li, Zhengbiao Gu, Yan Hong, and Li Cheng , State Key Laboratory of Food Science and Technology, School of Food Science and Technology, Jiangnan University, People's Republic of China, published in Carbohydrate Polymers 88 (2012) 699- 706*.*
- Synthesis and characterization of starch-g-poly(vinyl acetate-co-butyl acrylate) bio-based adhesive for wood application, by Zia-ud-Din , Lei Chen, Ikram Ullah, Peng KaiWang, Allah Bakhsh Javaid, Chun Hu, Mengchao Zhang ,Ishtiaq Ahamd, and Hanguo Xiong, of the College of Food Science and Technology, Huazhong Agricultural University, Wuhan, China and ZhenjiongWangb of the School of Food Science, Nanjing Xiaozhuang University, Nanjing, China, published in International Journal of Biological Macromolecules 114 (2018) 1186-1193*.*

More generally, polysaccharides have been recently studied as potential adhesive for the wood composite industry

Polysaccharides are natural polymeric carbohydrates composed of long chains of monosaccharide units joined by glycosidic linkages.

Examples of polysaccharide biopolymers are starch, glycogen, galactogen, cellulose and chitin.

A comparative study showing the interest of using polysaccharides as adhesives in some applications has been provided in :
Polysaccharides as Adhesives: A Critical Review, by Anil Kumar Patel, and Philippe Michaud of Clermont Université, Université Blaise Pascal, Institut Pascal UMR CNRS 6602, Polytech' Clermont Ferrand, Aubière, France, and Jean-Denis Mathias of IRSTEA, Laboratoire d'Ingénierie pour les Systemes Complexes, Aubière France, Rev. Adhesion Adhesives, Vol. 1, No. 3, August 2013*.*

More particularly, the performances of cornstarch-quebracho tannin-based resins as adhesive in the plywood production have been studied in : Cornstarch and tannin in phenol-formaldehyde resins for plywood production, by Fatima Charrier and Bertrand Charrier of Sylvadour, IUT des Pays de l'Adour, Mont de Marsan, France, Antonio Pizzi of ENSTIB, Université de Nancy 1, Epinal, France, and Amine Moubarika, Ahmed Allal of IPREM-EPCP (UMR 5254), Université de Pau et des Pays de l'Adour, 2, avenue Pierre Angot, 64053 Pau cedex 9, France, published in Industrial Crops and Products 30 (2009) 188-193*.*

An overview of the use starch based adhesive in wood composite materials is also known from : Starch-Based Adhesives for Wood/Wood Composite Bonding: Review, by Ravindra V. Gadhave, Prakash A. Mahanwar, Pradeep T. Gadekar, Department Polymer and Surface Engineering, Institute of Chemical Technology, Mumbai, India, published in Open Journal of Polymer Chemistry, 2017, 7, 19-32, ISSN Online: 2165-6711; ISSN Print: 2165-6681*.*

According to this overview, starch from at least one of dent corn, waxy corn, high amylose corn, tapioca, potato, wheat and rice can be used as adhesive for wood composite material.

However, the above-mentioned issues of water consumption, adhesive viscosity, sedimentation, and more generally of process implementation complexity remain the same with starch-based adhesives as with protein-based adhesives.

### Invention Summary

The present invention aims at providing a process for the manufacture of a lignocellulosic fibre-based composite material that solves at least parts of the above-mentioned problems.

The present invention thus relates to a process for the manufacture of a lignocellulosic fibre-based composite material.

The process comprises the steps of:
- obtaining a fibrous mix comprising defibrated lignocellulosic material and defibrated polysaccharide-based pellets, the polysaccharide-based pellets comprising :
   ∘ polysaccharides, and
   ∘ optionally a resin ;
   the polysaccharides and the resin constituting more than 50% by weight of each pellet;
- blending the fibrous mix with an adapted liquid to form a composite mixture; the adapted liquid comprising :
   ∘ a resin, or
   ∘ an aqueous liquid and/or a resin, if the polysaccharides contained in the polysaccharides based pellets comprise at least 50% in weight of one of wheat flour, starch, gum arabic, glucomannan, methyl or carboxymethylcellulose, or chitosan,
   and,
- curing the composite mixture, thereby forming the lignocellulosic fibre-based composite material.

More than 50%" by weight means from 50.01% to 100% by weight.

Advantageously, each polysaccharide-based pellets can comprise more than 50% by weight polysaccharides.

In other words, the process can comprise obtaining a fibrous mix comprising defibrated lignocellulosic material and defibrated polysaccharide-based pellets, the polysaccharide-based pellets comprising more than 50% by weight polysaccharides.

In the process, the step of obtaining a fibrous mix can comprise:
- providing a lignocellulosic material and providing polysaccharide-based pellets;
- mixing the lignocellulosic material and the polysaccharide-based pellets, thereby obtaining a mix of lignocellulosic material polysaccharide-based pellets; and
- defibrating the mix of lignocellulosic material and polysaccharide-based pellets.

This allows different ingredients to be combined in the form of a pellet (granulate) to reduce the amount of resin (such as PAE resin) used in the process to form the composite mixture and the composite material. This makes it possible to increase the ratio of biobased content in the composition of the binder of the obtained composite material.

In a process according to an embodiment of the invention, a fibrous mix mainly comprised of a defibrated lignocellulosic material and defibrated polysaccharide-based pellets is formed before being blended with a resin (i.e. "resinated").

The fibrous mix comprises at least 40%, preferably at least 60%, more preferably 80% w/w on dry matter of fibres.

For defibration, the lignocellulosic material and the polysaccharide-based pellets are passed through a defibrator (such as by the Asplund or Mason method). The defibrated polysaccharide-based pellets may be a source of fibres (fibre-shaped particles) and/or non-fibre particles having properties (length, diameter or section, mechanical properties) which are different from those of the lignocellulosic material. But above all, the polysaccharide-based pellets may be a polysaccharide source that can form an adhesive agent or that can enhance the adhesive and mechanical properties of the adhesive agent used in the formed composite material.

Compared to the disclosure of the known prior art references, the process according to the invention greatly reduces the amount of water used. In particular, no water is used to introduce the polysaccharides in the fibrous mix.

Furthermore, the process of the invention addresses the viscosity issues that may occur in processes according to the prior art that may be caused by the use of a plant flour (or meal) dispersion. No shelf life of such dispersion must be managed.

The use of pellets as source (or carrier) of polysaccharides limits the risk of sedimentation of the polysaccharide source during the process, compared to the use of polysaccharides in bulk powder form, and provides a better polysaccharide distribution in the composite material.

Composite materials having good mechanical performance, such as flexural modulus of rupture (MOR) and modulus of elasticity (MOE), may be obtained..

In such embodiment of a process according to the invention, refining the lignocellulosic material and mixing the polysaccharides with this material is performed in a single step, which may be performed directly on the composite material production site.

This is cost-effective, compared to prior art processes that require separate grinding or milling of plant material and preparation of a polysaccharide dispersion.

The step of defibrating the mix of lignocellulosic material and polysaccharide-based pellets may comprise a step of steaming the mix of lignocellulosic material and polysaccharide-based pellets before defibration by a thermo-mechanical process or a pressure release based process.

The step of defibrating the mix of lignocellulosic material and polysaccharide-based pellets may comprise:
- steaming the mix of lignocellulosic material and polysaccharide-based pellets in a steaming bin by steam to a temperature comprised between 70°C and 150°C, and preferably between 80°C and 95°C,
- conveying to a pre-heater the steamed mix of lignocellulosic material and polysaccharide-based pellets and squeezing water out of the mix of lignocellulosic material and polysaccharide-based pellets before it enters a pre-heater,
- pre-heating the squeezed mix of lignocellulosic material and polysaccharide-based pellets in the pre-heater to a temperature depending on the lignocellulosic material and adapted to soften the lignocellulosic material fibres to ease their separation,
- processing the pre-heated mix of lignocellulosic material and polysaccharide-based pellets in a refiner, thereby obtaining the fibrous mix.

Alternatively, the step of defibrating the mix of lignocellulosic material and polysaccharide-based pellets may comprise:
- placing the mix of lignocellulosic material and polysaccharide-based pellets into a chamber;
- steaming the mix of lignocellulosic material and polysaccharide-based pellets;
- increasing the pressure inside the chamber to a high pressure; and
- releasing the mix of lignocellulosic material and polysaccharide-based pellets through an orifice of the chamber to atmospheric pressure.

In the step of providing a lignocellulosic material, the lignocellulosic material may be in a discrete form, such as chips.

The aqueous liquid can be water.

When a resin is used as liquid (or is contained in the liquid) blended with the fibrous mix and/or as a constituent of the polysaccharide-based pellets, the resin (or the resins) may be selected from:
- a polyamidoamine-epichlorohydrin (PAE) resin, a polyalkylenepolyamine-epichlorohydrin resin, an itaconic acid-based polyamidoamine-epichlorohydrin resin and/or an amine polymer-epichlorohydrin resin,
- an epoxy resin such as bisphenol A diglycidyl ether epoxy resin,
- isocyanate resin, such as polymeric methylenediphenyl diisocyanate (pMDI)
- urea-formaldehyde resin, melamine-formaldehyde resin, melamine-urea-formaldehyde resin, phenol-formaldehyde resin, resorcinol-formaldehyde resin, other resins based on formaldehyde or on another aldehyde such as furfural, propanal, butyraldehyde, succinaldehyde, glutaraldehyde, dimethoxyethanal, glyoxylic acid, glycolaldehyde, vanillin,
- a polyurethane-based resin,
- a polyacid-based resin such as based on maleic anhydride or acetic acid,
- an acrylate-based or methacrylate-based resin such as poly(methyl methacrylate),
- ethylene vinyl acetate (EVA), ethylene-co-vinylacetate-co-acrylic acid, ethylene-co-vinylacetate-co-methacrylic acid, ethylene-co-vinylacetate-co-vinylalcohol, carboxylated vinyl acetate-ethylene copolymers, ethylene vinyl alcohol (EVOH), polyvinylalcohol, polyvinylbutyral-co-vinylalcohol, polyvinylacetate-co-vinylalcohol.

A preferred resin is selected from a polyamidoamine-epichlorohydrin (PAE) resin, a polyalkylenepolyamine-epichlorohydrin resin, an itaconic acid-based polyamidoamine-epichlorohydrin resin and/or an amine polymer-epichlorohydrin resin, preferably a PAE resin.

The use of a non-formaldehyde resin (e.g. PAE resin) decreases or eliminates formaldehyde emission.

The resin used as liquid (or contained in the liquid) blended with the fibrous mix and the resin used as a constituent of the polysaccharide-based pellets can be a same resin or different resins. For example, two different resins from the above resin example list can be selected. When different resins are used, they must be compatible with one another, that is to say that they must not interact with each other in a negative way for the quality of the composite material obtained. Advantageously, the use of different resins can facilitate the implementation of the process and / or improve the final performance of the composite.

An aspect of the present invention thus relates to a polysaccharide-based pellet comprising at least 50% by weight of polysaccharide and a 0.1% to 50% by weight of a resin. The resin can be one of the above-mentioned resin.

The present invention also relates to a process as above described, wherein the polysaccharide-based pellets comprise one or several of the following polysaccharides : starch, dextrin, starch ester, hydroxyethylated or hydroxypropylated starch, carboxymethyl starch, cationic or anionic starch; polyols, cellulose nanoparticles.

Starch can be for example potato starch, wheat starch, tapioca starch, cassava starch, rice starch, corn starch, waxy corn starch.

Plant based polysaccharide can be obtained in various modified forms such as regenerated starch, chemically modified starch (hydrolyzed starch) or thermally modified starch.

Exemplary polyols include glycerol, ethylene glycol, diethylene glycol, triethylene glycol, tetraethylene glycol and oligomers of diethylene glycol.

Cellulose nanoparticles can be obtained from commercial sources or isolated from plant-based fibers by acid-hydrolysis. Cellulose nanoparticles can be characterized by, for example, the size of the nanoparticle, the cross-sectional shape of the nanoparticle, and the cross-sectional length and aspect ratio of the nanoparticle. Accordingly, in certain embodiments, the cellulose nanoparticle has a size of from about 1 nm to about 2000 nm, about 10 nm to about 1000 nm, about 10 nm to about 500 nm or about 10 nm to about 200 nm. In certain embodiments, the cross-sectional shape of the nanoparticle may be triangular, square, pentagonal, hexagonal, octagonal, circular, or oval. In certain other embodiments, the average cross-sectional length of the cellulose nanoparticle is about 0.1 nm to about 100 nm, or about 1 nm to about 10 nm.

The polysaccharide-based pellets comprise one or more cellulosic based materials. More particularly, the cellulosic based material may comprise chemically, enzymatically, thermally or mechanically modified cellulose. Alternatively, or additionally, the composition may contain chemically, enzymatically, thermally or mechanically modified hemicellulose.

Alternatively, or additionally the composition may contain one or more proteinaceous materials

The polysaccharide-based pellets can comprise one or more monomers or oligomers from the group of compounds with the ability to form hydrogen bonds. More particularly, the polysaccharide-based pellets can comprise one of more monomers or oligomers with hydroxyl group such as one or more of : simple polyols such as glycerol, ethylene glycol, diethylene glycol, triethylene glycol, tetraethylene glycol and oligomers of diethylene glycol, sugar alcohols such as arabitol, xylitol, mannitol, sorbitol, maltitol, isomlat, lactitol, polyglicitol, monosaccharides such as glucose, fructose, galactose, disaccharides such as sucrose, lactose, lactulose, cellobiose, xylobiose, tetrahalose, maltose, amino sugars such as galactosamine, glucosamine and chitobiose, sugar acids such as aldonic acids, uronic acids and aldaric acids, oligosaccharides such as gluco-oligosaccharide, fructo oligosaccharides, carbohydrate syrups such as glucose syrup, corn syrup, high fructose corn syrup, high maltose corn syrup, sweet sorghum syrup, maple syrup, birch syrup, fruit syrups, invert syrups, by products of sugar refineries such as molasses, treacle and golden syrup, products of hydrolysis of polysaccharides.

The polysaccharide-based pellets can comprise extracellular polysaccharides from microorganisms. For example exopolysaccharide called MB adhesive, produced from a bacterial strain (from the Montana Biotech Corporation, USA), is comprised of 95% carbohydrate and 2% protein. Such product can be used in the polysaccharide based pellets composition.

The polysaccharides contained in the polysaccharide-based pellets can comprise at least one polysaccharide that has been modified by etherification, esterification, acid hydrolysis, dextrinization, oxidation or enzyme treatment. The adhesive performance (bonding strength) of the used polysaccharides and the mechanical and water resistance properties of the composite material can be enhanced by such treatment.

By way of example, the following modified polysaccharide based product have been described in the state of the art and can be used :
- Esterified Starch with maleic anhydride, to enhance hydrophobicity;
- Esterified waxy corn starch with grafted vinyl acetate (VAc) monomers, to enhance bonding properties and water resistance;
- Starch grafted with the co-monomers of vinyl acetate (VAc) and butyl acrylate (BA) to improve the shear strength in dry and wet states;

Also Oxidized starch blended UF resin adhesive has good chemical stability, insulating properties, temperature resistance, aging resistance, oil resistance and mildew resistance and environmentally-friendly starch adhesive has no harm to the human body and can be applied to wood adhesion.

Degermed meals can also be used.

The fibrous mix may comprise a weight ratio of defibrated lignocellulosic material to defibrated polysaccharide-based pellets comprised between 40:60 and 99:1, and preferably between 80:20 and 95:5.

The composite mixture may comprise:
- an amount of defibrated lignocellulosic material ranging from 40% to 99%, preferably from 50% to 95%, and more preferably from 80% to 90%, for example 84% in weight of the total dry matter of the composite mixture, and
- an amount of defibrated polysaccharide-based pellets ranging from 1% to 60%, preferably from 5% to 40%, and more preferably from 5% to 20% in weight of the total dry matter of the composite mixture.

Optionally, resin may represent from 0.1% to 20%, preferably from 0.3% to 5%, and more preferably from 0.5% to 3%, for example from 0.9% to 1.6% in weight of the total dry matter of the composite mixture.

The step of blending the fibrous mix with an adapted liquid may comprise blending the fibrous mix in a blow line with the liquid (e.g. with liquid resin).

The step of curing the composite mixture may comprise the steps of:
- drying the resinated fibrous mix to a moisture content comprised between 0% and 20%, and preferably between 5% and 10%, forming (S32) the dried resinated fibrous mix into a mat,
- pressing the mat to obtain the lignocellulosic fibre-based composite material.

The invention also relates to a process for the manufacture of a fibreboard, comprising such a process, wherein it further comprises the steps of cooling and sawing the lignocellulosic fibre-based composite material, thereby forming fibreboards.

The invention also relates to a fibreboard obtained by such process.

The lignocellulosic material may be for example wood, corn stover, coconut husk, cotton stalk, flax, grass, hemp, kenaf, wheat straw, bagasse, oil palm trunks, bamboo, or a mix of two or more thereof. When the lignocellulosic material comprises wood, said wood may comprise at least one of pine wood, spruce wood, birch wood, and beech wood.

The polysaccharide-based pellets used can comprise one or several additives. Many additives can be used.

The amount of additive in the polysaccharide-based pellets can be adjusted to optimize the properties of the adhesive used in the final composite material.

Additives may be present in the final polysaccharide-based pellets at a weight percent in the range from 0.01 (w/w) to 50% (w/w), preferably from 0.01% (w/w) to 30% (w/w), more preferably from 0.01% (w/w) to 20% (w/w).

The additive can be one of the following, mentioned as non-limitative examples.

### 1) Formaldehyde scavenging agents

A variety of formaldehyde scavenging agents can be used. Different formaldehyde scavenging agents have different reactivity profiles, and a particular formaldehyde scavenging agent (e.g., H2NC(O)NH2, Me2NC(O)NH2, or CH3CH2NH2) can be selected to optimize the performance properties of the adhesive composition and/or binder composition formed by the adhesive. Accordingly, in certain embodiments, one or several formaldehyde scavenging agents can be used, having for formula RNH2, R2NH, RC(O)NH2, R2NC(O)NH2, or RC(O)N(H)R where R represents independently for each occurrence H, alkyl, aryl, or aralkyl.

In certain embodiments, the formaldehyde scavenging agent has the formula RN(H)C(O)N(H)R, where R represents independently for each occurrence H, alkyl, aryl, or aralkyl.

In certain other embodiments, the formaldehyde scavenging agent is H2NC(O)NH2, H2NC(O)N(H)Me, MeN(H)C(O)N(H)Me, H2NC(O)N(CH3)2, CH3C(O)NH2, CH3CH2C(O)NH2, CH3NH2, CH3CH2NH2, (CH3)2NH or (CH3CH2)2NH, where Me represents a methyl group.

In still other embodiments, the formaldehyde scavenging agent is H2NC(O)NH2.

The term "alkyl" as used herein refers to a saturated straight or branched hydrocarbon, such as a straight or branched group of 1-12, 1-10, or 1-6 carbon atoms, referred to herein as C1-C12 alkyl, C1-C10 alkyl, and C1-C6 alkyl, respectively. Exemplary alkyl groups include, but are not limited to, methyl, ethyl, propyl, isopropyl, 2-methyl-1-propyl, 2-methyl-2-propyl, 2-methyl-1-butyl, 3-methyl-1-butyl, 2-methyl-3-butyl, 2,2-dimethyl-1-propyl, 2-methyl-1-pentyl, 3-methyl-1-pentyl, 4-methyl-1-pentyl, 2-methyl-2-pentyl, 3-methyl-2-pentyl, 4-methyl-2-pentyl, 2,2-dimethyl-1-butyl, 3,3-dimethyl-1-butyl, 2-ethyl-1-butyl, butyl, isobutyl, t-butyl, pentyl, isopentyl, neopentyl, hexyl, heptyl, octyl, etc.

The term "aryl" as used herein refers to refers to a mono-, bi-, or other multicarbocyclic, aromatic ring system. Unless specified otherwise, the aromatic ring is optionally substituted at one or more ring positions with substituents selected from alkanoyl, alkoxy, alkyl, alkenyl, alkynyl, amido, amidino, amino, aryl, arylalkyl, azido, carbamate, carbonate, carboxy, cyano, cycloalkyl, ester, ether, formyl, halogen, haloalkyl, heteroaryl, heterocyclyl, hydroxyl, imino, ketone, nitro, phosphate, phosphonato, phosphinato, sulfate, sulfide, sulfonamido, sulfonyl and thiocarbonyl. The term "aryl" also includes polycyclic ring systems having two or more cyclic rings in which two or more carbons are common to two adjoining rings (the rings are "fused rings") wherein at least one of the rings is aromatic, e.g., the other cyclic rings may be cycloalkyls, cycloalkenyls, cycloalkynyls, and/or aryls. Exemplary aryl groups include, but are not limited to, phenyl, tolyl, anthracenyl, fluorenyl, indenyl, azulenyl, and naphthyl, as well as benzo-fused carbocyclic moieties such as 5,6,7,8-tetrahydronaphthyl. In certain embodiments, the aryl group is not substituted, i.e., it is unsubstituted.

The term "aralkyl" as used herein refers to an aryl group having at least one alkyl substituent, e.g. aryl-alkyl-. Exemplary aralkyl groups include, but are not limited to, arylalkyls having a monocyclic aromatic ring system, wherein the ring comprises 6 carbon 10 atoms. For example, "phenylalkyl" includes phenylC4 alkyl, benzyl, 1-phenylethyl, 2- phenylethyl, etc.
2) Antimicrobial agents such as oxidants or nisin,
3) Antibacterial agents such as nitrogen derivatives,
4) Fungicides such as sulphur-containing products,
5) Preservatives such as citric acid, paraben,
6) Pigments such as mineral pigments, e.g. titanium dioxide, or carbon black,
7) Agents improving moisture resistance or water-repellent agents
   These improving moisture resistance or water-repellent agents improve the ability of the composite material to be resistant to water, *i.e.,* not absorb water. Exemplary types of agents that improve moisture resistance include fluorinated polyol compounds, silicones, siloxanes (including functionalized siloxane polymers, such as hydroxy-terminated siloxane polymers or hydroxyl alkyl siloxane polymers), polyolefin polymers, wax ((e.g., fatty acids (such as an alkyl carboxylic acid), salts of a fatty acid (e.g., an alkali metal salt of an alkyl carboxylic acid), esters of a fatty acid (e.g., an alkyl ester of a carboxylic acid, an aryl ester of a carboxylic acid, an alkyl ester of an alkanoic acid, or an aryl ester of an alkanoic acid), fatty alcohols, mixtures of hydrophobic hydrocarbons.
8) Fire-resistant or fire retardant agents.
   Exemplary fire retardants include, for example, (i) phosphoric acid or a salt thereof, such as a mono-ammonium phosphate, di-ammonium phosphate, ammonium poly -phosphate, melamine phosphate, guanidine phosphate, urea phosphate, alkali metal phosphate, and alkaline earth metal phosphate, (ii) a halogenated phosphate compound, (iii) a phosphate ester, such as tri-o-cresyl phosphate and tris(2,3-dibromopropyl) phosphate, (iv) a chlorinated organic compound, such as a chlorinated hydrocarbon or chlorinated paraffin, (iv) a brominated organic compound, such as a brominated hydrocarbon, bromobisphenol A, tetrabromobisphenol A (TBBPA), decabromobiphenyl ether, octabromobiphenyl ether, tetrabromobiphenyl ether, hexabromocyclododecane, bis(tetrabromophthalimido) ethane, tribromophenol, andbis(tribromophenoxy) ethane, (v) a brominated oligomer or brominated polymer, such as TBBPA polycarbonate oligomer, brominated polystyrene, and TBBPA epoxy oligomer, (vi) a borate compound, such as an alkali metal borate, ammonium borate, or mixture comprising one or more of borax, boric acid, boric oxide, and disodium octoborate, (vii) aluminium materials, such as aluminium trihydrate and aluminium hydroxide, (viii) an alkaline earth metal hydroxide, such as magnesium hydroxide, (ix) an alkali metal bicarbonate, such as sodium bicarbonate, (x) an alkaline earth metal carbonate, such as calcium carbonate, (xi) antimony trioxide, (xii) hydrated silica, (xiii) hydrated alumina, (xiv) dicyandiamide, (xv) ammonium sulfate, and (xvi) a mixture of guanylurea phosphate and boric acid, (xvii) graphite, (xviii) melamine, and (xix) a phosphonate compound, such as diethyl-N,N-bis(2-hydroxyethyl) aminoethyl phosphonate; dimethyl-N,N-bis(2-hydroxyethyl) aminomethyl phosphonate; dipropyl-N,N-bis(3-hydroxypropyl) aminoethyl phosphonate; and dimethyl-N,N-bis(4-hydroxybutyl) aminomethyl phosphonate.
   In certain embodiments, the fire retardant is (i) phosphoric acid or a salt thereof, such as a mono-ammonium phosphate, di-ammonium phosphate, ammonium poly -phosphate, melamine phosphate, guanidine phosphate, urea phosphate, alkali metal phosphate, and alkaline earth metal phosphate, (ii) a phosphate ester, such as tri-o-cresyl phosphate and tris(2,3- dibromopropyl) phosphate, aluminium trihydrate and aluminium hydroxide, (iii) an alkaline earth metal hydroxide, such as magnesium hydroxide, (iv) an alkali metal bicarbonate, such as sodium bicarbonate, (v) antimony trioxide, or (vi) hydrated alumina.
9) Catalysts
   Exemplary catalysts include a primary amine, a secondary amine, a tertiary amine, an organometallic compound, an ammonium compound, or a combination thereof.
10)A pH modulators
   The pH modulator can be an acid or base. In certain embodiments, the pH modulator is an alkali metal hydroxide (e.g. sodium hydroxide or calcium hydroxide) or an alkali metal salt of a carboxylate organic compound (e.g., an alkali metal salt of citrate, such as di-sodium citrate).
11) Wood preservatives.
   Exemplary wood preservatives include, for example, (i) chromated copper arsenate (CCA), (ii) alkaline copper quaternary, (iii) copper azole, (iv) a borate preservative compound, (v) a sodium silicate-based preservative compound, (vi) a potassium silicate-based preservative compound, (vii) a bifenthrin preservative compound, (viii) a coal-tar creosote, (ix) linseed oil, (x) tung oil, and (xi) an insecticide, such as an organochloride compound, organophosphate compound, carbamate compound, pyrethroid, neonicotinoid, and ryanoid.
12) Proteins
   The protein can be any protein from a plant, animal (such as gelatin) or microorganism, preferably from a plant, more preferably from a plant seed, or a mixture thereof. It can be a protein concentrate (comprising more than 60 wt% proteins based on dry matter) or a protein isolate (comprising more than 80 wt% proteins based on dry matter). Preferred proteins are soy protein isolate and wheat gluten concentrate.
13) Polyphenols, such as tannin.
   For example, it has been demonstrated that quebracho tannin can replace part of phenol-formaldehyde resin in a composite material without loss (or with a limited loss) of mechanical performance.
14) Natural rubbers, such as latex.
   Latex and starch was added as an adhesive to synthesize the medium density fiber (MDF) board panels. The results indicated that starch can be used as a viable alternative binder with natural rubber latex
15) Silica nanoparticles.
   They can be used to improve the bonding capacity of renewable starch-based wood adhesive.
16) Montmorillonite. It can also be used to improve the bonding capacity of renewable starch-based wood adhesive.
17) Monosaccharides and/or oligosaccharides.

The invention also relates to a fibrous mix comprising lignocellulosic material fibres and defibrated polysaccharide-based pellets. This fibrous mix can be obtained and/or used in a process according to some embodiments the invention.

The invention also relates to a composite mixture comprising such a fibrous mix and a resin.

The invention also relates to a composite mat formed from such composite mixture.

The invention also relates to a lignocellulosic fibre-based composite material comprising a fibrous mix as above described and a resin, the fibrous mix forming a reinforcement and adhesive for said lignocellulosic fibre-based composite material and the resin, in a cured form, forming or being part of a matrix of said lignocellulosic fibre-based composite material.

The invention finally relates to a fibreboard panel made with a process as above-disclosed.

### Brief Description of the Several Views of the Drawing

Other particularities and advantages of the invention will also emerge from the following description.

In the accompanying drawings, given by way of non-limiting examples:
- figure 1 is a schematic view of a pellet mill that can be used in a process for producing polysaccharide-based pellets that can be used in a process according to the invention;
- figure 2 is a schematic block diagram representing the main steps of a process according to the invention;
- figure 3 is a schematic block diagram representing a first example embodiment of one of the steps of Figure 2;
- figure 4 is a schematic block diagram representing a second example embodiment of one of the steps of Figure 2;
- figure 5 is a schematic block diagram representing a first example embodiment of one of the steps of Figure 4;
- figure 6 is a schematic block diagram representing a second example embodiment of one of the steps of Figure 4;
- figure 7 is a schematic block diagram representing an example embodiment of one of the steps of Figure 2.

### Detailed Description of embodiments of the invention

The process according to the present invention uses polysaccharide-based pellets. A polysaccharide-based pellet is a pellet comprising polysaccharide used as adhesive in a composite material produced according to the present invention. More particularly, a polysaccharide-based pellet comprises :
- polysaccharides,
- optionally a resin ;
the polysaccharides and the resin constituting more than 50% by weight of the pellet.

Several pelletizing processes can be used to obtain such polysaccharide-based pellets. Pelletizing is mainly a compressing technique which results in raw material agglomeration by compacting and forcing it through die openings by a mechanical process.

The raw material used is a polysaccharide based raw material, for example provided in powder form. The raw material is typically extracted from a plant. It can contain one or more polysaccharides, one or more oligosaccharides, one or more monosaccharides, one or more polypeptides, or a combination thereof.

Pelletizing is generally performed by a "pellet mill" device. Pellet mill devices include so called pellet presses, roll presses, and extruders.

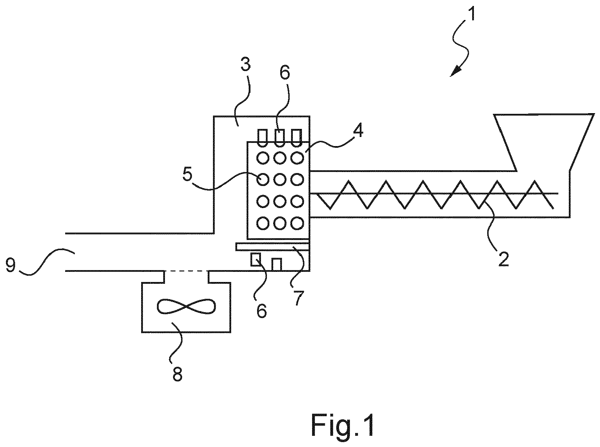

An example pellet mill device (or "pellet mill"), namely a pellet press or "pelletizer" is represented in Figure 1.

The pellet mill 1 includes a feeder 2 which comprises a screw-conveyor system or any suitable conveying system to deliver a controlled and constant flow of material feed into a pelleting chamber 3.

The pelleting chamber 3 comprises a die 4. The die 4 is a part comprising calibrated holes 5. Many embodiments of pellet mill dies are known. In the represented embodiment, the die 4 is a cylindrical rotating die. Rollers press the material through the holes 5 of the die 4. Generally, industrial pellet mills use a die and roller system assembled in a vertical plane but pellet mills for lower scale production use horizontal or "flat" circular die.

The material is pressed and passed through holes by roller pressure to form cylindrical shaped pellets 6 that are finally cut at the proper length by one or several stationary knives 7 located outside the rotating die 4.

The pellet mill further comprises a cooler 8, generally an air-cooler. The cooler allows to cool down the temperature of pellets. Indeed, compression of raw material results in a material temperature increase due to the friction increase with pressure. Cooling ensures strengthening and durability of the pellets.

To form polysaccharide-based pellets, the polysaccharides, optionally a resin, and optionally additives are processed together in the pellet mill.

The polysaccharide based pellet is obtained at the exit 9 of the pellet mill 1. has a bulk density comprised between 300 kg/m3 and 500 kg/m3, preferably between 350 kg/m3 and 450 kg/m3.

The main factors affecting pellet density are described hereafter.

Most essential parameters in the pellet formulation directly depend on the characteristics of the raw material which is used.

Moisture content is an important parameter. It is advantageously monitored between 10% and 20% (in weight) to obtain pellets with an acceptable density and to avoid pellet degradation by moisture absorption.

The targeted moisture content of the polysaccharide based pellet is advantageously comprised between 8% and 14%.

The size of the particles of the raw material before pelletization is advantageously comprised between 30 µm and 5 mm. A raw material comprising a mix of particles of various sizes in a wide range of size is preferred to obtain high density pellets (thanks to the small sized particles), while comprising larger particles that will participate to the mechanical properties of the final composite material. The particles of largest size must however be smaller than the holes 5 of the die 4. (for example a largest particle size of 5 mm for die holes having a 6 mm diameter).

Other factors are directly related to the pelletization process parameters. The flow rate of raw material at the inlet of the pellet mill is controlled by the feeder actuation e.g. by the rotation speed of the feeder screw, the roller speed and pressure (pressing force) applied to the material in the die chamber. Typical screw speeds and roll speeds are respectively between 7,5 rpm and 300 rpm, and between 1 and 16 rpm. The pressing force can typically be between 10 kN/cm and 150 kN/cm.

Formulated polysaccharide-based pellets have preferably a cylindrical shape. They have advantageously a diameter comprised between 4 mm and 10 mm (preferably 6 mm). They have advantageously a length comprised between 30 mm to 60 mm.

Alternative pelletization processes can also be used.

In particular, a pellet extrusion process can be used.

The extrusion process is well known in art.

Extrusion is a continuous thermomechanical process consisting in forcing a raw material to go through a die by the mean of an Archimedes screw (or endless screw).

This process is performed with raw materials which are able to soften with temperature.

This softening could be linked to melting process or plasticization process.

The softening comes from the plasticization of carbohydrate (e.g., starch) or globular protein structures which are weakened by the cumulative effect of shear and temperature.

The raw material formulation used in extrusion processes generally includes a plasticizer like water or water-soluble small molecules.

The amount of plasticizer to be added in combination with the raw material can for example be comprised between 10% to 40% wt.

Extruder could be equipped with one or two screws. The screw(s) of the extruder is(are) positioned in a heated jacket which helps to process highly viscous material.

With a single screw extruder, the jacket and the associated screw could be divided in three areas.

A first area is a feeding area, situated at the entrance of the jacket where the raw material is introduced and where the screw section is constant.

The granulometry of the ingredients is adjusted based on channel dimensions in the heated jacket.

Indeed, too small particles will not be fed adequately to the compression area. Too large particles could block the screw rotation.

The ideal particle size of the raw material used in an extrusion process is advantageously comprised between 100µm to 3cm. If additives which can't be softened by the extruder are comprised in the ingredients of the pellets, for example a metallic oxide compound, clay, or a phosphorous compound, the particle size range of these additives needs to be lower than the die dimensions (e.g. diameter) and preferably lower than 10 times of the die diameter, for example 1mm.

A second area is a compression area where the size of the channel in which the product conveyed is reduced, resulting in a pressure increase. In this area the shape of the particles of the product (raw material) present in the extruder is modified. The plasticizer is locally distributed in the product microstructure, resulting in a destruction of weak interactions between particles or molecules and in a product softening. The raw material is also brought in the heated jacket to an adequate temperature, advantageously comprised between 70°C to 160°C depending on the thermo-mechanical properties of the raw material used to form polysaccharide-based pellets.

A third area is a pumping area where the screw section of the channel is constant, but small.

In the third area, a temperature profile is applied to melt or soften the raw material used to form pellets. This temperature profile is adapted based on the raw material thermomechanical properties. The exit temperature can be comprised comprised between 70°C to 170°C. At the exits of the heated jacket the die has the shape (e.g. the diameter) desired for the final product. Typically, the die can have a circular shape and a diameter comprised between 1 to 10 mm, preferably between 5 and 6 mm, to form pellets having a cylindrical shape of such diameter.

The extruded polysaccharide material is cooled down (advantageously by air) and cut in pellets of the desired length (advantageously between 1mm to 3 cm), thus forming polysaccharide based pellets.

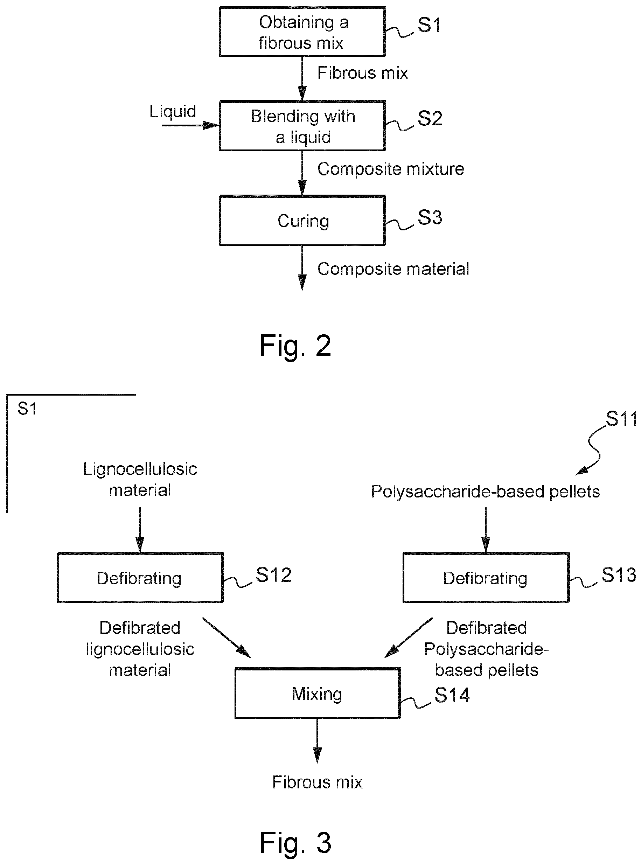

Figure 2 represents the main steps of a process according to the invention. In a step of obtaining a fibrous mix (S1), a mix comprising a defibrated lignocellulosic material and defibrated polysaccharide based pellets is obtained.

The term "resin" refers to an adhesive, a binder, a cross-linking agent or a curing agent in the form of a liquid or solid.

By lignocellulosic material, it is meant a material substantially comprising (or comprising a significant proportion of) lignocellulosic fibres. This comprises plants or plant parts. The lignocellulosic material may in particular be wood (e.g. pine wood, spruce wood, birch wood, or beech wood). Other types of lignocellulosic material can be used in the invention, as an alternative or complement to wood, such as corn stover, coconut husk, cotton stalk, flax, grass, hemp, kenaf, wheat straw, rice straw, bagasse, oil palm trunks, bamboo, or a mix thereof. The lignocellulosic material can be provided in a raw form, or a transformed form. Typically, wood may be provided in the form of chips.

The polysaccharide based pellets used in the process are advantageously essentially obtained with a pellet mill and a pelletization process of plant based polysaccharide material as described with reference to Figure 1, or alternative suitable devices and processes as above explained.

The lignocellulosic material and the polysaccharide based pellets are defibrated and mixed to form a fibrous mix. Defibration generally relates to the conversion of a material into fibrous constituents through a defibration process. In the present case of polysaccharide based pellets , defibration converts the pellets into smaller size constituents such as fibrous constituents (fibre shaped particles) and/or non-fibrous constituents (non-fibre particles).

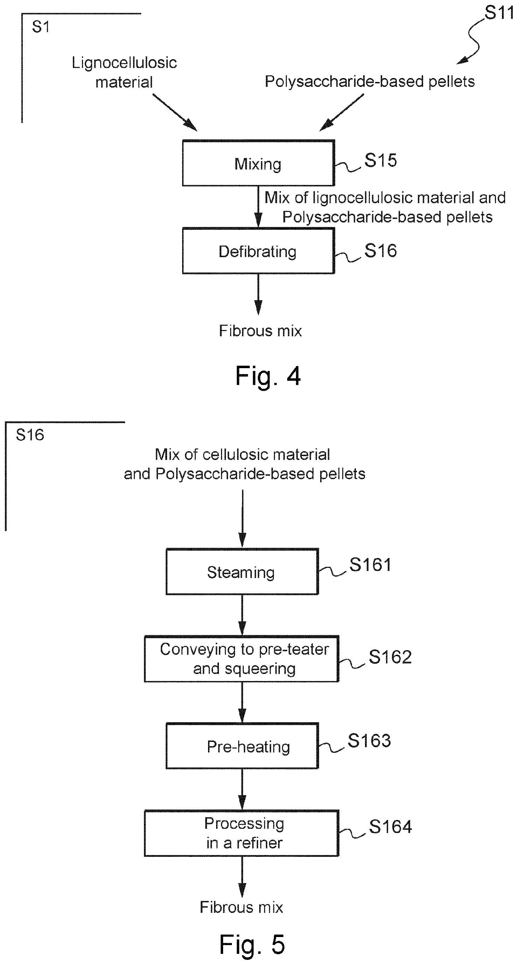

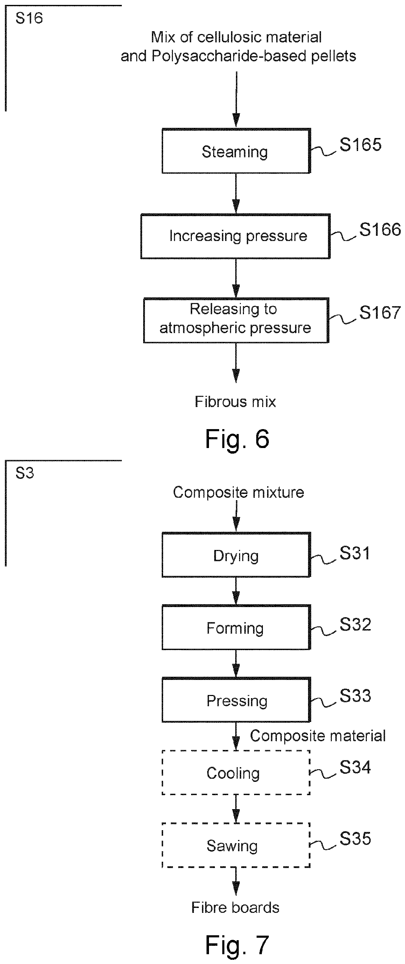

Defibration may be performed according to several processes, which are exemplified in Figures 5 and 6 hereafter described. There are two main ways to perform the step of obtaining a fibrous mix S1, which are described respectively with reference to Figure 3 and Figure 4.

The fibrous mix comprises a ratio of lignocellulosic material to polysaccharide based pellets comprised between 50:50 and 99:1, and preferably between 80:20 and 95:5, such as 88:12.

A step of blending the obtained fibrous mix with a liquid S2 is then performed. This step may be performed in a blow line, where the fibrous mix is sprayed with a liquid. In the represented example, the liquid is a resin, preferably a thermoset resin.

In embodiments of the invention, the liquid may be an aqueous liquid such as water. In such case, the carbohydrates contained in the polysaccharide-based pellets form all or part of the adhesive used in the final composite material. Therefore, providing a resin in the pellet and/or during the blending may be unnecessary.

More particularly, polysaccharides that can be used as adhesive, without resin, comprise wheat flour, starch, gum arabic, glucomannan, methyl or carboxymethylcellulose, and chitosan.

After this step, a composite mixture is obtained.

The amount of resin sprayed may advantageously be such that the resin *(i.e.* the dry matter of the resin) represents from 0.1% to 20%, preferably from 0.3% to 5%, more preferably 0.5% to 3%, in weight of the total dry matter of the composite mixture. In addition to the fibrous mix and the resin, an amine compound and/or additives not present (or not present in sufficient quantity) in the polysaccharide-based pellets can be added at this step. The amine compound can be one of urea, methylurea, polyurea, polyvinylamine, melamine, polyethylenimine (PEI), diethanoldiamine, ethanoldiamine, ethanolamine, diethanolamine. The additive can be at least one of the above listed additives.

The amine compound, provided by the polysaccharide-based pellets and by optional addition can represent from 0.01% to 25%, preferably from 0.01% to 10%, and more preferably from 2% to 10% in weight of the total dry matter of the composite mixture (*i.e.* of the fibrous mix, resin, amine compound(s) and additive(s)).

The additive (or additives), provided by the polysaccharide-based pellets and by optional addition can represent from 0.01% to 20%, preferably from 0.01% to 10%, and more preferably from 0.1% to 3% in weight of the total dry matter of the composite mixture (*i.e.* of the fibrous mix, resin, amine compound(s) and additive(s)).

In a subsequent curing step S3, the composite mixture obtained after blending the fibrous mix with resin is cured. In this step the curing agent is hardened by cross-liking of polymer chains and/or cross-liking of the carbohydrates. The result of this step is a composite material, which may be further processed to form a final product such as a fibreboard. An example embodiment of the curing steps S3, comprising several steps and optional steps to provide a fibreboard, is detailed with reference to Figure 7.

Figure 3 is a schematic block diagram representing a first example embodiment of the steps of obtaining a fibrous mix S1 comprising a defibrated lignocellulosic material and defibrated polysaccharide-based pellets. A lignocellulosic material (*e.g*. wood chips) and polysaccharide-based pellets are provided (S11). According to this first embodiment, the lignocellulosic material is defibrated (step of defibrating the lignocellulosic material S12). In parallel, the polysaccharide-based pellets are defibrated (step of defibrating the pellets S13).

The step of defibrating the lignocellulosic material S12 and the step of defibrating polysaccharide-based pellets S13 are performed independently. They may be performed on a same production site, or in different, independent, production sites. The defibrated lignocellulosic material and the defibrated polysaccharide-based pellets are mixed (step of mixing S14) to form a homogeneous fibrous mix having the desired ratio of lignocellulosic material to pellet material.

Figure 4 is a schematic block diagram representing a second example embodiment of the step of obtaining a fibrous mix S1 comprising a defibrated lignocellulosic material and defibrated polysaccharide-based pellets.

A lignocellulosic material (*e.g*. wood chips) and polysaccharide-based pellets are provided (S11). According to this second embodiment the lignocellulosic material and the polysaccharide-based pellets are mixed (mixing step S15) to form a so-called mix of lignocellulosic material and polysaccharide basedpellets. A step of defibrating the mix of lignocellulosic material and polysaccharide-based pellets S16 is performed. In this steps, the lignocellulosic material and the polysaccharide-based pellets are defibrated together, thereby forming a homogeneous fibrous mix.

In the case of the use of polysaccharide-based pellets, the simultaneous defibration of the lignocellulosic material and the polysaccharide-based pellets has the essential advantage of simplifying the production of a homogeneous fibrous mix, in which the polysaccharides are uniformly distributed. Obtaining fibres from the pellets is not necessarily sought.

Whether the lignocellulosic material and the polysaccharide-based pellets are defibrated together according to the method of Figure 4 or separately according to the method of Figure 3, defibration can be performed according to two alternative types of process, respectively called Asplund method and Mason method.

Figure 5 represents an example embodiment of the step of defibrating the mix of lignocellulosic material and polysaccharide-based pellets S16 according to an Asplund method.

The method of Figure 5 comprises a step of steaming S161 the mix of lignocellulosic material and polysaccharide-based pellets in a steaming bin by steam being to a temperature comprised between 70°C and 110°C, and preferably comprised between 80°C and 95°C. In subsequent step of conveying and squeezing S162, the steam-heated mix is conveyed to a pre-heater. Water is squeezed out of the mix of lignocellulosic material and polysaccharide-based pellets , before the mix enters the pre-heater.

In the preheater, the squeezed mix of lignocellulosic material and polysaccharide-based pellets is pre-heated (S163). The pre-heating temperature depends on the mix that is pre-heated, and essentially on the lignocellulosic material of the mix. More particularly, the pre-heating temperature must be adapted to soften the lignocellulosic material fibres to ease their upcoming defibration.

Then a step of processing the mix in a refiner S164 also called refining is performed.

The refiner comprises one or several discs and plates which are mounted on each of the opposing faces of the refiner disc(s). The plates and/or the disc(s) are rotary. The pre-heated mix is provided near the center of the plates and disks, and subjected to a centrifugal force that propels it outwards, so that it moves between the opposing refiner plates in a generally radial direction from the inner perimeter to the outer perimeter of the plates and disc(s).

The refiner plates generally feature a pattern of bars and grooves, as well as dams, which together provide a repeated compression and shear actions on the introduced material (*i.e.* the mix). The compression and shear actions acting on the material intend to separate fibres from the material, provides a certain amount of development of fibrillation of the material, and generates some fibre cutting which is usually less desirable.

The refiners can be high, medium or low consistency refiners. The refiner discs may operate at rotational speeds of 900 to 2300 revolutions per minute (RPM) when used for high consistency refining and as low as 400 revolutions per minute for low consistency refining.

After the defibrating step, a fibrous mix is obtained and can be further processed.

Figure 6 represents an example embodiment of the step of defibrating the mix of lignocellulosic material and polysaccharide-based pellets S16 according to a Mason method.

The method of Figure 6 comprises placing the mix of lignocellulosic material and polysaccharide-based pellets into a chamber. The chamber generally designates a closed volume able to sustain a high pressure. A step of steaming S165 is performed, wherein the mix of lignocellulosic material and polysaccharide-based pellets is saturated with steam. The pressure inside the chamber is increased for this step to a pressure comprised between 200 and 1000 kPa, such as between 400 and 900 kPa, for example a pressure of about 690 kPa (which roughly corresponds to 100 pounds per square-inch).

A step of increasing the pressure S166 is performed, wherein the pressure inside the chamber is increased to a pressure comprised between 2000 and 4000 kPa, such as between 2500 and 3500 kPa, for example a pressure of about 2800 kPa (which roughly corresponds to 400 pounds per square-inch).

The mix contained in the chamber is defibrated by a sudden release from the chamber to atmospheric pressure, through an orifice of the chamber which suddenly opens (step of releasing to atmospheric pressure S167).

After this step, a fibrous mix is obtained and can be further processed.

Figure 7 is a schematic block diagram representing an example embodiment of the curing step S3 of Figure 2. The curing step S3 designates the succession of operations or steps performed after the blending step S2 up to obtaining a cured composite material.

An example embodiment of the curing step is briefly described with reference to Figure 7 for a resinated fibrous mix, but the fibrous mix blended with a liquid obtained after the blending step S2 may be processed according to any adequate subsequent sequence of steps known in the prior art.

The curing step S3 represented in Figure 7 comprises a drying step S31, wherein the resinated fibrous mix is dried to a moisture content comprised between 0% and 20%, and preferably between 5% and 10%. Dryer cyclones and a Z-Sifter may be used to perform the drying step. A Z-Sifter cleans the fibres of contaminates before the next step. The dried resinated fibrous mix is then formed into a composite mat (forming step S32). The mat undergoes a pressing step (S33), which may comprise passing the mat through successive presses, such as a cold pre-press and then a hot press. After pressing, the composite material is hardened to its final state.

In optional steps, the composite material is handled and machined to form fibreboards. These steps comprise cooling S34 and sawing S35 the lignocellulosic fibre-based composite material, thereby forming fibreboards.

The described process can for example be used to form high density fibreboard panel (having a density greater than 800 kg/m³), medium density fibreboard or MDF (having a density comprised between 650 kg/m³ and 800 kg/m³), low density fibreboard (having a density comprised between 550 kg/m³ and 650 kg/m³) and ultra-low density fibreboard (having a density of less than 550 kg/m³).

### Industrial application

The present invention provides a process for the manufacture of a lignocellulosic fibre-based composite material, which has costs and environmental friendliness advantages (in particular as it saves water and energy) over the comparable processes known in the prior art. A preferred application of such a process is the manufacture of fibreboards, such as MDF. Thanks to the manufacturing process according to the invention using defibrated polysaccharide-based pellets pellets as source of adhesive , provided in a fibrous mix of defibrated lignocellulosic material and defibrated polysaccharide-based pellets pellets, the fibre-based composite material may have enhanced mechanical properties.

The polysaccharide-based pellets can comprise one or several additives. This can enhance the properties of the produced composite material and/or makes it possible to use several plants species depending on their availability (local or temporal availability). The polysaccharide-based pellets can comprise the resin or part of the resin that is optionally used in the composite material.

The use of a mix of defibrated lignocellulosic material and defibrated polysaccharide-based pellets can have economic advantages, environmental advantages, advantages in terms of process simplicity (the additives are brought directly by the pellets), but also advantages with respect to the properties of the final product.

## Claims

1. Process for the manufacture of a lignocellulosic fibre-based composite material comprising the steps of:
• obtaining a fibrous mix (S1) comprising defibrated lignocellulosic material and defibrated polysaccharide-based pellets, the polysaccharide-based pellets comprising :
∘ polysaccharides, and
∘ optionally a resin ;
the polysaccharides and the resin constituting more than 50% by weight of each pellet;
• blending the fibrous mix with an adapted liquid to form a composite mixture; the adapted liquid comprising :
∘ a resin, or
∘ an aqueous liquid and/or a resin, if the polysaccharides contained in the polysaccharides based pellets comprise at least 50% in weight of one of wheat flour, starch, gum arabic, glucomannan, methyl or carboxymethylcellulose, or chitosan,
and,
• curing (S3) the composite mixture, thereby forming the lignocellulosic fibre-based composite material.

2. Process according to Claim 1, wherein the step of obtaining a fibrous mix (S1) comprises:
• providing a lignocellulosic material and providing polysaccharide-based pellets (S11);
• mixing (S15) the lignocellulosic material and the polysaccharide-based pellets, thereby obtaining a mix of lignocellulosic material polysaccharide-based pellets; and
• defibrating (S16) the mix of lignocellulosic material and polysaccharide-based pellets pellets.

3. Process according to Claim 2, wherein the step of defibrating (S16) the mix of lignocellulosic material and polysaccharide-based pellets comprises a step of steaming (S161,S165) the mix of lignocellulosic material and polysaccharide-based pellets pellets before defibration by a thermo-mechanical process or a pressure release based process.

4. Process according to any one of the preceding Claims, wherein the aqueous liquid is water.

5. Process according to any one of the preceding claims, wherein the resin optionally contained in the pellet and/or used as liquid in the blending step is selected from:
- a polyamidoamine-epichlorohydrin (PAE) resin, a polyalkylenepolyamine-epichlorohydrin resin, an itaconic acid-based polyamidoamine-epichlorohydrin resin and/or an amine polymer-epichlorohydrin resin,
- an epoxy resin such as bisphenol A diglycidyl ether epoxy resin,
- isocyanate resin,
- urea-formaldehyde resin, melamine-formaldehyde resin, melamine-urea-formaldehyde resin, phenol-formaldehyde resin, resorcinol-formaldehyde resin, other resins based on formaldehyde or on another aldehyde such as furfural, propanal, butyraldehyde, succinaldehyde, glutaraldehyde, dimethoxyethanal, glyoxylic acid, glycolaldehyde, vanillin,
- a polyurethane-based resin,
- a polyacid-based resin such as based on maleic anhydride or acetic acid,
- an acrylate-based or methacrylate-based resin such as poly(methyl methacrylate),
- ethylene vinyl acetate (EVA), ethylene-co-vinylacetate-co-acrylic acid, ethylene-co-vinylacetate-co-methacrylic acid, ethylene-co-vinylacetate-co-vinylalcohol, carboxylated vinyl acetate-ethylene copolymers, ethylene vinyl alcohol (EVOH), polyvinylalcohol, polyvinylbutyral-co-vinylalcohol, polyvinylacetate-co-vinylalcohol.

6. Process according any one of the preceding claims, wherein the polysaccharide-based pellets comprise one or several of the following polysaccharides :
starch, dextrin, starch ester, hydroxyethylated or hydroxypropylated starch, carboxymethyl starch, cationic or anionic starch; polyols, cellulose nanoparticles.

7. Process according any one of the preceding claims, wherein the polysaccharide-based pellets comprise one or more cellulosic based materials.

8. Process according any one of the preceding claims, wherein the polysaccharide-based pellets comprise one of more monomers or oligomers with hydroxyl group such as one or more of : simple polyols such as glycerol, ethylene glycol, diethylene glycol, triethylene glycol, tetraethylene glycol and oligomers of diethylene glycol, sugar alcohols such as arabitol, xylitol, mannitol, sorbitol, maltitol, isomlat, lactitol, polyglicitol, monosaccharides such as glucose, fructose, galactose, disaccharides such as sucrose, lactose, lactulose, cellobiose, xylobiose, tetrahalose, maltose, amino sugars such as galactosamine, glucosamine and chitobiose, sugar acids such as aldonic acids, uronic acids and aldaric acids, oligosaccharides such as gluco-oligosaccharide, fructo oligosaccharides, carbohydrate syrups such as glucose syrup, corn syrup, high fructose corn syrup, high maltose corn syrup, sweet sorghum syrup, maple syrup, birch syrup, fruit syrups, invert syrups, by products of sugar refineries such as molasses, treacle and golden syrup, products of hydrolysis of polysaccharides.

9. Process according to any one of the preceding Claims, wherein the composite mixture comprises:
- an amount of defibrated lignocellulosic material ranging from 40% to 99%, preferably from 50% to 95%, and more preferably from 80% to 95%, for example 84% in weight of the total dry matter of the composite mixture, and
- an amount of defibrated polysaccharide-based pellets ranging from 1% to 80%, preferably from 5% to 40%, and more preferably from 5% to 25% by weight of the total dry matter of the composite mixture., and optionally an amount of resin ranging from 0.1% to 20%, preferably from 0.3% to 5%, and more preferably from 0.5% to 3%, for example from 0.9% to 1.6% weight of the total dry matter of the composite mixture.

10. Process according to any one of the preceding Claims, wherein the step of curing the composite mixture (S3) comprises the steps of:
- drying (S31) the composite mixture to a moisture content comprised between 0% and 20%, and preferably between 5% and 10%, forming (S32) the dried composite mixture into a mat,
- pressing (S33) the mat to obtain the lignocellulosic fibre-based composite material.

11. Process for the manufacture of a fibreboard, comprising a process according to any one of the preceding Claims, wherein it further comprises the steps of cooling (S34) and sawing (S35) the lignocellulosic fibre-based composite material, thereby forming fibreboards.

12. Process according to any one of the preceding Claims, wherein the lignocellulosic material is wood, corn stover, coconut husk, cotton stalk, flax, grass, hemp, kenaf, wheat straw, bagasse, oil palm trunks, bamboo, or a mix of two or more thereof, preferably wood.

13. Process according any one of the preceding claims, wherein the polysaccharide-based pellets comprise one or several of the following additives:
- a formaldehyde scavenging agent,
- an antimicrobial agent,
- an antibacterial agent,
- a fungicide,
- a preservative,
- a pigment,
- an agent improving moisture resistance or a water-repellent agent,
- a fire-resistant or fire retardant agent,
- a catalyst,
- a pH modulator,
- a wood preservative,
- a protein,
- a polyphenol such as tannin,
- a natural rubber,
- silica nanoparticles,
- montmorillonite,
- monosaccharides,
- oligosaccharides

14. A fibrous mix comprising lignocellulosic material fibres and defibrated polysaccharide-based pellets, wherein the weight ratio of lignocellulosic material to defibrated polysaccharide-based pellets is comprised between 40:60 and 99:1, and preferably between 80:20 and 95:5, such as 88:12.

15. A fibreboard panel made of a lignocellulosic fibre-based composite material obtained by a process according to any one of Claims 1 to 13.
